Europäisches Patentamt

European Patent Office

Office européen des brevets

(11) Publication number: **0 119 812 B1**

# EUROPEAN PATENT SPECIFICATION

(45) Date of publication of patent specification: **05.02.92**  (51) Int. Cl.⁵: **C04B 35/66**, C04B 35/04

(21) Application number: **84301668.4**

(22) Date of filing: **13.03.84**

(54) Monolithic refractory composition.

(30) Priority: **18.03.83 US 476687**

(43) Date of publication of application:
**26.09.84 Bulletin 84/39**

(45) Publication of the grant of the patent:
**05.02.92 Bulletin 92/06**

(84) Designated Contracting States:
**BE DE FR GB IT LU NL SE**

(56) References cited:
**FR-A- 1 576 636**
**GB-A- 1 149 429**
**US-A- 3 304 186**

**CHEMICAL ABSTRACTS, vol. 89, no. 4, July 1978, page 324, no. 29585t, Columbus, Ohio, US; & JP - A - 77 154 818 (SHINAGAWA REFRACTORIES CO., LTD.) 22-12-1977**

**IDEM**

**AMERICAN CERAMIC SOCIETY BULLETIN, vol. 49, no. 7, July 1970, pages 652-657, Columbus, Ohio, US; A.H.FOESSEL et al.: "Improved phosphate-bonded basic refractories"**

(73) Proprietor: **OUIGLEY COMPANY INC.**
**235 East 42nd Street**
**New York, N.Y. 10017(US)**

(72) Inventor: **Krulik, Alan Edward**
**117 Bernard Avenue**
**Edison New Jersey 08837(US)**

(74) Representative: **Wood, David John et al**
**PFIZER LIMITED, Ramsgate Road**
**Sandwich, Kent CT13 9NJ(GB)**

## Description

This invention concerns an improved quick-setting refractory composition for monolithic linings of metallurgical vessels such as the basic oxygen furnace (BOF).

BOF type steelmaking, primarily because of its ability to produce quality steel at reasonable cost, has experienced phenomenal growth since its inception about 30 years ago. In the ongoing attempt to minimize production costs, a major concern of BOF processors is the wearing of the refractory brick lining of the vessel and the resultant consumption of refractory material to replace the lining. Such approaches as improved brick formulations and better operational practices including gunning maintenance programs have reduced this consumption to about 3 to 5 pounds (1•36-2•27Kg) of refractory per ton of steel produced. Further reduction, however, is still sought.

Despite the trend in recent years toward replacement or repair of brick linings of metallurgical vessels with less expensive monolithic refractory linings, today's BOF vessels are still faced over the entire hot surface with refractory brick. The bricks, normally tar or resin bonded high magnesia, are predominantly laid by hand, with the vessels having a working lining of from about 18 to 36 inches (45-91cm) and a backup or tank safety lining of from about 9 to 15 inches (22•5-37•5cm). Of particular interest is the upper or cone section of the BOF which is subjected to extremely corrosive and erosive conditions.

It is therefore a primary objective of the present invention to provide a quick-setting refractory composition which develops a monolithic layer suitable as the original refractory lining of BOF and other steelmaking vessels.

Quick-setting refractory compositions containing calcium oxide and glassy alkali metal polyphosphate are disclosed in such as U.S. Patents 3,304,187, 3,357,843 and 3,920,464, while refractory brick having a calcium silicophosphate bond are disclosed in U.S. Patents 3,390,002 and 3,479,194. A spraying method purportedly permitting the development of thick monolithic refractory coatings is disclosed in published European Patent Application 0009021.

Japanese Patent Publication 77,154,818 (Chemical Abstracts Vol.89, No. 4, 1978, p.324) describes refractory mixes containing basic refractory, calcium oxide, phosphate, silica and silicon or ferrosilicon. American Ceramic Society Bulletin Vol.49, No. 7, 1970, p.652-657 discloses phosphate-bonded magnesite refractory compositions including two- and three-component binder systems. United Kingdom Patent Specification 1149429 describes a refractory composition containing alkaline earth oxide, $NaH_2PO_4$ and a glassy alkali metal polyphosphate. U.S. Patent 3304186 discloses a refractory mixture of aggregate containing magnesia, pitch and a sodium polyphosphate bonding agent.

It has now been found that by the proper selection of the bonding system, a monolithic refractory layer can be prepared which suitably replaces the entire brick lining of BOF and other steelmaking vessels.

The present invention provides a quick-setting refractory composition comprising a basic refractory aggregate, a water-soluble glassy silicate, active calcium oxide and a glassy alkali metal polyphosphate, for application as a monolithic lining of a metallurgical vessel, characterized by the basic refractory aggregate being from 80-98 weight percent of the total composition, the glassy silicate being a water-soluble alkali metal silicate of particle size of 1 millimeter or less having an alkali metal oxide to silicon dioxide molar ratio of from 0.25 to 2, with the glassy silicate being from 0.5 to 4 weight percent of the total composition, the active calcium oxide being from 0.5 to 3 weight percent of the total composition, the glassy alkali metal phosphate being from 1 to 5 weight percent of the total composition, the composition optionally containing one or more of chromic oxide, clay and carbon, the chromic oxide being up to 4 weight percent of the total composition, exclusive of any chromic oxide contained in the basic refractory aggregate, the clay being up to 6 weight percent of the total composition and the carbon being up to 6 weight percent of the total composition.

Preferably, the basic refractory aggregate comprises magnesia, the glassy silicate is sodium silicate having a molar ratio of sodium oxide to silicon dioxide of about 0.5 and the calcium oxide is present in the form of calcium hydroxide, while the alkali metal polyphosphate is sodium hexametaphosphate, the chromic oxide is in the form of pulverized chrome ore, the clay is air floated ball clay and the carbon is in the form of gilsonite or carbon black.

Especially preferred is a refractory composition which comprises about 83 weight percent magnesia, about 1 weight percent sodium silicate having a molar ratio of sodium oxide to silicon dioxide of about 0.5, about 1.5 weight percent calcium hydroxide, about 3.5 weight percent sodium hexametaphosphate, about 5 weight percent pulverized chrome ore, about 4 weight percent air floated ball clay, about 1 weight percent gilsonite and about 1 weight percent carbon black.

Also contemplated is a method of forming a monolithic lining on a metallurgical vessel which comprises gunning onto at least a portion of the inside surface of the vessel an aqueous mixture of the refractory

2

compositon, as is a refractory lining for a metallurgical vessel which comprises a monolithic layer of the refractory composition, particularly where the refractory lining is in the cone section of a basic oxygen furnace and consists of the monolithic layer.

Further contemplated is a basic oxygen steelmaking furnace having a working lining, the improvement wherein the lining consists of a monolithic layer of rapid setting, preferably calcium-silico-phosphate bonded, basic refractory of at least about 12 inches (30cm) thickness with a hot strength of at least about 50 psi (345KPa) at 2000°F (1093°C) and a linear shrinkage of no more than about 2.5 percent at 2900°F (1593°C).

The refractory composition of the present invention, while generally suitable for preparing monolithic linings in substantially all metallurgical vessels, is especially applicable to the basic oxygen furnace (BOF), particularly the upper or cone section of the furnace.

Certain practical and technical considerations must be given to such use. The refractory composition should be safe to work with and should show good gunning characteristics. There should be minimal dusting and low rebound during application. The composition should have a rapid set, developing at least 30 percent of its green strength within 30 minutes of water addition, to permit continuous gunning of large cross-sectional areas in forming linings to depths of greater than 30 inches 76cm without slumping. The resulting monolithic refractory layer should have a high degree of refractoriness as well as a suitable hot strength over a wide temperature range (hot modulus of rupture, or HMR, of at least about 50 psi (345KPa), and preferably at least about 90 psi (621KPa), at 2000°F (1093°C)) and low linear shrinkage (no more than about 2.5 percent at 2900°F (1593°C)). It should also be easily deskulled and have a high degree of durability, including good resistance to slag and steel penetration as well as to erosive and corrosive gas streams. The present refractory composition and resulting monolithic layer have such favorable characteristics.

The particulate basic refractory aggregate which comprises from about 80 to 98 weight percent of the refractory composition may be any basic refractory grain. This includes, but is not limited to, magnesia, deadburned dolomite, olivine, chrome ore, and stabilized calcia, alone or in any combination thereof. Magnesia is preferred. The aggregate particles include various combinations of fine and coarse fractions which are well established in the art for casting and gunning refractory compositions, typical particle size distributions being illustrated in the examples which follow. The refractory aggregate is present at an optimum level to provide the necessary high temperature durability, this level suitably being about 83 weight percent of the refractory composition with magnesia as the basic refractory.

Particulate glassy silicate is present in the refractory composition in the amount of from about 0.5 to 4 weight percent. By particulate glassy silicate is meant a water-soluble alkali metal silicate of particle size about 1 millimeter or less having an alkali metal oxide to silicon dioxide molar ratio of from about 0.25 to 2. The glassy silicate, when mixed with the calcium oxide in water, forms a calcium silicate at ambient conditions to assure the monolithic layer of a rapid development of high green strength. The silicate also acts as a sintering aid for high temperature strength of the layer. Silicate levels below about 0.5 percent will not provide sufficient green strength, while levels above about 4 percent significantly lower the refractoriness of the monolithic layer. Preferably the glassy silicate is sodium silicate having a molar ratio of sodium oxide to silicon dioxide of about 0.5 present in the refractory compositon at the level of about 1 weight percent.

The glassy polyphosphate of the refractory composition has the general formula $M_{n+2} P_n O_{3n+1}$, where M represents an alkali metal ion and n is an integer equal to or greater than 3. By "glassy" is meant amorphous or noncrystalline. The glassy polyphosphates commercially available are generally mixtures of the polyphosphate having different values of n in the type formula and are usually characterized by an average value of n, often referred to as the chain length of the polyphosphate. While the average chain length of the glassy polyphosphate used in the practice of this invention can vary over a wide range, the preferred range is between about 10 and 30. Sodium polyphosphates are commonly used. The polyphosphate provides an erosion resistant bond and hot strength. It also combines with the calcium oxide and water at ambient temperatures to form calcium phosphate, which provides a fast set mechanism for the composition. The effective level for the polyphosphate is from about 1 to 5 height percent of the refractory composition. Polyphosphate levels below about 1 percent will not provide a sufficient initial set and strength required to build up thick cross-sectional areas without slump. Amounts in excess of about 5 height percent cause the composition to set up too quickly, creating lamination planes from the improper knitting of successive passes during the gunning installation, and also produce a monolithic layer of lower refractoriness. The preferred polyphosphate is sodium hexametaphosphate, which has an average chain length of about 13 and a molar ratio of sodium oxide to phosphorus pentoxide of about 1.1. The preferred level of the hexametaphosphate, suitably of particle size of about 5 millimeters or less, is about 3.5 weight percent.

The calcium oxide content of the refractory composition should range from about 0.5 to 3 height percent. Any material which provides calcium oxide reactive with the silicate and phosphate of the composition and which has a particle size of about 2 millimeters or less is acceptable. Such materials include lime, calcium hydroxide and cements. The calcium oxide reacts with the glassy silicate to give high green strength and set and also with the alkali metal polyphosphate to provide the quick-setting mechanism, as discussed hereinbefore. Calcium oxide levels less than about 0.5 result in too slow a set and generate insufficient bond development, while amounts greater than about 3 percent set too quickly and lower the composition refractoriness. Preferably, the calcium oxide is present in the form of calcium hydroxide at a level of about 1.5 weight percent (1.1 percent calcium oxide) of the refractory composition. The refractory composition optionally contains up to about 4 weight percent chromic oxide exclusive of any contained in the basic refractory aggregate. Although not required, the chromic oxide combines with the magnesia of the basic refractory aggregate to yield a magnesia-chrome type spinel which provides high temperature strength as well as high refractoriness and improved slag and steel penetration resistance. Chromic oxide levels above about 4 percent offer little added improvement in this property. Preferably the chromic oxide is present in the form of pulverized chrome ore, 50 percent of which has a particle size of about 50 micrometers or less, present in the amount of about 5 height percent (2.1 height percent chromic oxide).

The refractory composition may additionally contain up to about 6 height percent each of dry, particulate clay and carbon. The primary function of the clay is to provide adhesion during installation of the refractory layer, lower levels of the clay resulting in increased rebound and levels much above 6 percent reducing the refractoriness and hot strength of the resulting monolithic layer. While any clay may be used, the preferred clay is an air floated ball clay with the clay level at about 4 weight percent. The carbon serves to impart to the monolithic layer good spalling resistance, good deskulling characteristics, and nonwetting property with respect to molten slag and steel. The absence or minimal amount of the carbon tends to lower the spalling resistance, with the layer having an affinity for slag and steel adherence which creates additional deskulling problems. Levels of carbon much above 6 percent, however, provide greater pore volume for slag and steel penetration of the monolithic layer and also decrease the layer's hot strength. While many carbon based materials may be used, the carbon is preferably added as a combination of granular gilsonite and powdered carbon black, each at about 1 weight percent of the refractory composition.

The unique combination of properties exhibited by the refractory composition and resulting monolithic refractory layer of the present invention, particularly the quick set to high green strength, suitable hot strength over a wide range of temperatures, and low linear shrinkage, is believed to be primarily the result of the novel calcium-silico-phosphate bond system formed from reaction of the calcium oxide, glassy silicate and glassy alkali metal polyphosphate of the composition during preparation of the monolithic layer.

Since the monolithic layer can satisfactorily replace brick as the original lining of steelmaking vessels such as the BOF, certain advantages accrue to steelmakers by this replacement. Not only is the installation and maintenance of the monolithic layer much faster, it is also cheaper than conventional bricking of a BOF since both material and labor costs are less. This is particularly true with the relining of warped or out-of-round shells where laying brick into a properly keyed lining to give a sound construction is often nearly impossible. Use of the monolithic layer also eliminates brick joints which are prone to molten slag and steel penetration; deskulling is therefore easier because of the lower penetration of the refractory layer. The monolith further eliminates the necessity of a safety brick lining.

The following examples are merely illustrative and are not to be construed as limiting the invention, the scope of which is defined by the appended claims. In these examples, unless otherwise indicated, temperatures are expressed in degrees F, compositions are in weight percent and hot modulus of rupture (HMR) values are in psi. All references to mesh size in the examples are based on the U.S. Sieve Series (ASTM E-11-61); see Lange's Handbook of Chemistry, 11th Edition, Section 11, page 2 (1973).

Examples 1-8 and Comparative Examples C 1-3

Quick-setting refractories of the compositions indicated on Examples 1 to 8 and Comparative Examples C1 to C3 of Table I were prepared and evaluated as follows:

The listed ingredients for each run, equivalent to 10 pounds (4•5Kg) of refractory composition, were dry blended by mixing with a trowel for about one minute. Water equivalent to 8 weight percent of the dry blend was added to a Hobart type mechanical mixer. The dry refractory blend was then added to the mixer and wet mixed for 45 seconds. The wet mix was immediately rammed into 2 x 2 x 9 inch (5 x 5 x 22.5cm) gang molds, making three bars at a time. The bars were air set overnight, removed from the molds and air dried at 230° F (110° C) for 24 hours.

Each refractory composition was tested in triplicate for hot modulus of rupture (HMR) using a Pereny

4

Model MRK-3000 electrically heated HMR furnace equipped with two parallel 1-inch (2.54cm) diameter alumina rails having their axes 4.7 inches (11.94cm) apart and with a 4.5-inch (11.43cm) wide hydraulically controlled alumina loading ram. Eight test bars were placed in the furnace, being centrally located perpendicularly across the rails. The furnace was heated to a test temperature of 2000 ± 10°F (1093 ± 5.6°C) following ASTM procedure C-583 and held at that temperature for 3 hours. The bars were then broken at a loading rate of 0.05 inch (0.127cm) ram travel per minute while maintaining the test temperature. The hot modulus of rupture (HMR) was calculated following ASTM procedure C-583.

Each composition was also evaluated for linear change at 2900°F (1593°C). The 2 x 2 x 9 inch (5 x 5 x 22.5cm) test bars were loaded in an oil-fired down draft kiln, each bar being bedded on 0.5 inch (1.27cm) of high purity magnesite. The kiln was heated to 2900°F ± 10°F (1593 ± 5.6°C) over a 5-hour period and held at that temperature for an additional 3 hours. The length of each bar was then measured and the linear shrinkage at 2900°C (1593°C) calculated as the percentage reduction in the length of the bar at 2900°F (1593°C) from the starting 9 inch (22.5cm) bar length.

In addition, each composition was tested for rapid setting to high green strength. Eight pounds (3•6Kg) of the composition was dry blended and then mixed for 25 seconds with 9 weight percent water in a Hobart mechanical mixer. The wet mix was immediately rammed into plastic molds about 3 inches (7.5cm) in internal diameter by 1 3/4 inches (4.4cm) high. The molds were stripped from the casts following a 4-minute set period and the samples were tested for cold crushing strength (CCS) after one additional minute of air set (total air set of 5 minutes), after air drying for 48 hours and after air drying for 24 hours followed by drying at 230°F (110°C) for 24 hours. The testing was run on a Tinius Olsen compression tester (90,000 pound (41 tonne) capacity) at a compression load rate of 24 pounds (10.9Kg) per minute until failure.

Results of the HMR, linear change and green strength development for each of the eight compositions of the invention (Examples 1 to 8) and the three comparative compositions (Comparative Examples C1 to C3) are shown in Table I. These results clearly show the advantageous nature off the refractory composition of the present invention and the required presence of all three of the glassy silicate, calcium oxide and glassy alkali metal polyphosphate in the composition to insure a monolithic refractory having the desired combination of rapid set to high green strength, suitable hot strength and low linear shrinkage.

EP 0 119 812 B1

TABLE I

| Example | 1 | 2 | 3 | 4 | 5 | 6 | 7 | 8 | C1 | C2 | C3 |
|---|---|---|---|---|---|---|---|---|---|---|---|
| **Composition, wgt %** | | | | | | | | | | | |
| Refractory - Magnesia[1] | | | | | | | | | | | |
|   5-8 mesh (4.00-2.38mm) | 22.7 | 21.7 | 21.4 | 22.2 | 20.5 | 21.2 | 21.0 | 20 | 22.9 | 23.5 | 23.0 |
|   8-40 mesh (2.38-0.42mm) | 55.6 | 53.2 | 52.6 | 54.4 | 50.3 | 52.0 | 51.4 | 49 | 56.2 | 57.6 | 56.4 |
|   -40 mesh (-0.42mm) | 15.7 | 15.1 | 15.0 | 15.4 | 14.2 | 14.8 | 14.6 | 14 | 15.9 | 16.4 | 16.1 |
| Glassy silicate[2] | 1.0 | 1.0 | 1.0 | 1.0 | 1.0 | 1.0 | 1.0 | 1.0 | – | 1.0 | 1.0 |
| Calcium hydroxide[3] | 1.5 | 1.5 | 1.5 | 1.5 | 1.5 | 1.5 | 1.5 | 1.5 | 1.5 | 1.5 | – |
| Glassy alkali metal polyphosphate[4] | 3.5 | 3.5 | 3.5 | 3.5 | 3.5 | 3.5 | 3.5 | 3.5 | 3.5 | – | 3.5 |
| Chrome ore, pulverized[5] | – | – | 5.0 | – | 5.0 | – | 5.0 | 5.0 | – | – | – |
| Clay[6] | – | 4.0 | – | – | 4.0 | 4.0 | – | 4.0 | – | – | – |
| Gilsonite[7] | – | – | – | 1.0 | – | 1.0 | 1.0 | 1.0 | – | – | – |
| Carbon black[8] | – | – | – | 1.0 | – | 1.0 | 1.0 | 1.0 | – | – | – |
| **Characteristics** | | | | | | | | | | | |
| Set time, min | 2 | 2 | 2 | 2 | 2 | 2 | 2 | 2 | 3 | 2 hr | 24 br |
| CCS, psi (kPa) | | | | | | | | | | | |
|   5 min | 50 (345) | 53 (379) | 54 (372) | 16 (110) | 82 (566) | 63 (435) | 56 (386) | 113 (780) | 3 (21) | 0 | 0 |
|   48 hr air dry | 150 (1035) | 135 (931) | 137 (945) | 87 (600) | 118 (814) | 113 (780) | 120 (828) | 133 (918) | 121 (835) | 103 (711) | 56 (386) |
|   24 hr air dry, 24 hr 230°F (110°C) | 486 (3353) | 561 (3870) | 428 (2953) | 261 (1801) | 796 (5492) | 669 (4616) | 613 (4230) | 1130 (7797) | 248 (1711) | 92 (635) | 420 (2898) |
| HMR 2000°F (1093°C), psi (kPa) | 197 (1359) | 125 (862) | 128 (883) | 111 (766) | 191 (1318) | 150 (1035) | 60 (414) | 100 (690) | 113 (780) | 0 | 242 (1670) |
| Linear change 2900°F (1593°C), % | -1.6 | -2.0 | -1.7 | -1.1 | -2.9 | -2.3 | -1.6 | -1.8 | -1.4 | -0.8 | -1.4 |

(1) Magnesia particle size distribution (U.S. screens):

5-8 mesh (4.00-2.38mm) = thru 5 mesh (4.00mm), retained on 8 mesh

8-40 mesh (2.38-0.42mm) = thru 8 mesh (2.38mm), retained on 40 mesh

-40 mesh (-0.42mm) = all thru 40 mesh (0.42mm)

(2) GD silicate, -65 mesh (-0.21mm); Philadelphia Quartz Co., Philadelphia, PA

(3) Slaked lime (1.5% = 1.1% CaO), -200 mesh (-0.074mm); Mississippi Lime Co., Alton, IL

(4) Hexaphos (sodium hexametaphosphate), avg n= 13, -5mm; FMC Corp., Philadelphia, PA

(5) Transvaal B (5.0% = 2.3% chromic oxide), 50% -200 mesh (-0.074mm); Phillipp Bros. Chemicals Inc., New York, NY

(6) Gleason clay, air floated, 98% -200 mesh (-0.074mm); H.C. Spinks Clay Co., Inc., Paris, TN

(7) "Zeco 110" (Registered Trade Mark), -80 mesh (-0.177mm); Ziegler Chemical and Mineral Corp., Great Neck, NY

(8) N990, -325 mesh (-0.044mm); J.M. Huber Corp., Edison, NJ

The gunning characteristics of the refractory composition of Example 8 were determined by gunning panel tests. The gunning panel consisted of a 1/4 inch (6.3mm) thick steel plate 24 inches (61cm) square having 4, 15 inch (38mm) long anchors on a 12 inch (30.5cm) centerline and 5, 7 inch (17.8cm) long anchors on a staggered 12 inch (30·5cm) centerline.

A 1000-pound (454Kg) batch of the composition was dry blended and loaded into a batch type V-8 gun (Quigley Co., Inc., New York, NY) of 8 cubic foot (226.5 litres) capacity. The composition was gunned thru 1 1/2 inch (3.8cm) diameter hose using a water ring, a tank pressure of 30 psi (207KPa) and a jet pressure of 50 psi (345KPa). The gunning panel was supported vertically and gunned from a distance of 4 to 5 feet (122-152cm) building up layers until the gun was empty. The panel was then suspended with the monolithic layer face down to check the ability of the layer, which was about 22 inches (56cm) thick, to resist separation from the panel. The layer was also subjected to direct impingement of a propane burner flame to check for popping or spalling. The layer neither slumped, popped or spalled during the testing. Subsequent trials gave similar results with layer thickness of over 30 inches (76.2cm).

Similar results are realized with a particulate refractory composition containing 80 weight percent deadburned dolomite aggregate, 3 percent glassy silicate, 2 percent lime, 2 percent glassy alkali metal polyphosphate, 3 percent chromic oxide and 5 percent each clay and powdered carbon, or a particulate refractory composition of 94 weight percent magnesia aggregate, 0.5 each glassy silicate and lime, 1 percent each glassy alkali metal polyphosphate, chromic oxide and powdered carbon and 2 percent clay.

**Claims**

1. A quick-setting refractory composition comprising a basic refractory aggregate, a water-soluble glassy silicate, active calcium oxide and a glassy alkali metal polyphosphate, for application as a monolithic lining of a metallurgical vessel, characterized by the basic refractory aggregate being from 80-98 weight percent of the total composition, the glassy silicate being a water-soluble alkali metal silicate of particle size of 1 millimeter or less having an alkali metal oxide to silicon dioxide molar ratio of from 0.25 to 2, with the glassy silicate being from 0.5 to 4 weight percent of the total composition, the active calcium oxide being from 0.5 to 3 weight percent of the total composition, the glassy alkali metal phosphate being from 1 to 5 weight percent of the total composition, the composition optionally containing one or more of chromic oxide, clay and carbon, the chromic oxide being up to 4 weight percent of the total composition, exclusive of any chromic oxide contained in the basic refractory aggregate, the clay being up to 6 weight percent of the total composition and the carbon being up to 6 weight percent of the total composition.

2. The refractory composition of claim 1 wherein said basic refractory aggregate comprises magnesia.

3. The refractory composition of claim 1 wherein said glassy silicate is sodium silicate having a molar ratio of sodium oxide to silicon dioxide of about 0.5.

4. The refractory composition of claim 1 wherein said calcium oxide is present in the form of calcium hydroxide.

5. The refractory composition of claim 1 wherein said alkali metal polyphosphate is sodium hexametaphosphate.

6. The refractory composition of claim 1 wherein said chromic oxide is in the form of pulverized chrome ore.

7. The refractory composition of claim 1 wherein said clay is air floated ball clay.

8. The refractory composition of claim 1 wherein said carbon is in the form of gilsonite or carbon black.

9. A particulate quick-setting refractory gunning composition comprising a basic refractory aggregate, a water-soluble glassy silicate, active calcium oxide and a glassy alkali metal polyphosphate, for monolithic refractory linings of metallurgical vessels, characterised by the basic refractory aggregate being magnesia and constituting 83 weight percent of the total composition, the glassy silicate being sodium silicate having a molar ratio of sodium oxide to silicon dioxide of 0.5 and constituting 1 weight percent of the total composition, the active calcium hydroxide constituting 1.5 weight percent of the total compositions, the glassy alkali metal polyphosphate being sodium hexametaphosphate constituting 3.5 weight percent of the total composition, the composition containing chromic oxide in the form of chrome ore constituting 5 weight percent of the total composition, clay being air floated ball clay, constituting 4 weight percent of the total composition and carbon in the form of gilsonite and carbon black, each constituting 1 weight percent of the total composition.

10. A method of forming a monolithic refractory lining on a metallurgical vessel, which comprises gunning on to at least a portion of the inside surface of said vessel an aqueous mixture of the refractory composition of claim 1.

**Revendications**

1. Composition réfractaire à prise rapide comprenant un agrégat réfractaire basique, un silicate vitreux hydrosoluble, de l'oxyde de calcium actif et un polyphosphate de métal alcalin vitreux, en vue de son utilisation comme chemisage monolithique d'un récipient métallurgique, caractérisé en ce que l'agrégat réfractaire basique représente de 80 à 98 % en poids de la composition totale, le silicate vitreux étant un silicate de métal alcalin hydrosoluble ayant une taille de particules de 1 mm ou moins et ayant un rapport molaire oxyde de métal alcalin/dioxyde de silicium compris entre 0,25 et 2, le silicate vitreux représentant de 0,5 à 4 % en poids de la composition totale, l'oxyde de calcium actif représentant de 0,5 à 3 % en poids de la composition totale, le phosphate de métal alcalin vitreux représentant de 1 à 5 % en poids de la composition totale, la composition renfermant éventuellement un ou plusieurs composés choisis parmi l'oxyde chromique l'argile et le carbone, l'oxyde chromique représentant jusqu'à 4 % en poids de la composition totale, sans compter tout oxyde chromique contenu dans l'agrégat réfractaire basique, l'argile représentant jusqu'à 6 % en poids de la composition totale et le carbone représentant jusqu'à 6 % en poids de la composition totale.

2. Composition réfractaire selon la revendication 1, dans laquelle ledit agrégat réfractaire basique est constitué de magnésie.

3. Composition réfractaire selon la revendication 1, dans laquelle ledit silicate vitreux est le silicate de sodium ayant un rapport molaire entre l'oxyde de sodium et le dioxyde de silicium d'environ 0,5.

4. Composition réfractaire selon la revendication 1, dans laquelle ledit oxyde de calcium est présent sous la forme d'hydroxyde de calcium.

5. Composition réfractaire selon la revendication 1, dans laquelle ledit polyphosphate de métal alcalin est de l'hexamétaphosphate de sodium.

6. Composition réfractaire selon la revendication 1, dans laquelle ledit oxyde chromique est sous la forme de minerai de chrome pulvérisé.

7. Composition réfractaire selon la revendication 1, dans laquelle ladite argile est de l'argile en billes flottées à l'air.

8. Composition réfractaire selon la revendication 1, dans laquelle ledit carbone est sous la forme de gilsonite ou de noir de carbone.

9. Composition réfractaire en particules à prise rapide applicable au pistolet comprenant un agrégat réfractaire basique, un silicate vitreux hydrosoluble, de l'oxyde de calcium actif et un polyphosphate de métal alcalin vitreux, pour chemisages réfractaires monolithiques de récipients métallurgiques, caractérisée en ce que l'agrégat réfractaire basique est de la magnésie et représente 83 % en poids de la composition totale, le silicate vitreux étant un silicate de sodium ayant un rapport molaire oxyde de sodium/dioxyde de silicium de 0,5 et représentant 1 % en poids de la composition totale, l'hydroxyde de calcium actif représentant 1,5 % en poids de la composition totale, le polyphosphate de métal alcalin vitreux étant l'hexamétaphosphate de sodium et représentant 3,5 % en poids de la composition totale, la composition renfermant de l'oxyde chromique sous la forme de minerai de chrome représentant 5 % en poids de la composition totale, de l'argile sous la forme de billes flottées à l'air représentant 4 % en poids de la composition totale et du carbone sous la forme de gilsonite et de noir de carbone, représentant chacun 1 % en poids de la composition totale.

10. Procédé de formation d'un chemisage réfractaire monolithique sur un récipient métallurgique qui consiste à appliquer au pistolet, à au moins une partie de la surface intérieure dudit récipient, un mélange aqueux de la composition réfractaire selon la revendication 1.

**Patentansprüche**

**1.** Schnellbindende, feuerfeste Zusammensetzung, umfassend ein basisches, feuerfestes Aggregat, ein wasserlösliches, glasartiges Silikat, aktives Kalziumoxid und ein glasartiges Alkalimetallpolyphosphat, zur Anwendung als monolithische Auskleidung eines metallurgischen Behälters, dadurch gekennzeichnet, daß das basische, feuerfeste Aggregat 80-98 Gew.-% der Gesamtzusammensetzung ausmacht, das glasartige Silikat ein wasserlösliches Alkalimetallsilikat mit einer Teilchengröße von 1 Millimeter oder weniger ist mit einem molaren Verhältnis von Alkalimetalloxid zu Siliziumdioxid von 0,25 bis 2, wobei das glasartige Silikat 0,5 bis 4 Gew.-% der Gesamtzusammensetzung ausmacht, das aktive Kalziumoxid 0,5 bis 3 Gew.-% der Gesamtzusammensetzung ausmacht, das glasartige Alkalimetallphosphat 1 bis 5 Gew.-% der Gesamtzusammensetzung ausmacht, wobei die Zusammensetzung gegebenenfalls eines oder mehrere von Chromoxid, Ton und Kohlenstoff enthält, wobei das Chromoxid bis 4 Gew.-% der Gesamtzusammensetzung ausmacht, ausschließlich von in dem basischen, feuerfesten Aggregat enthaltenen Chromoxid, der Ton bis zu 6 Gew.-% der Gesamtzusammensetzung ausmacht und der Kohlenstoff bis zu 6 Gew.-% der Gesamtzusammensetzung ausmacht.

**2.** Feuerfeste Zusammensetzung nach Anspruch 1, worin das basische, feuerfeste Aggregat Magnesiumoxid umfaßt.

**3.** Feuerfeste Zusammensetzung nach Anspruch 1, worin das glasartige Silikat Natriumsilikat mit einem molaren Verhältnis von Natriumoxid zum Siliziumdioxid von etwa 0,5 ist.

**4.** Feuerfeste Zusammensetzung nach Anspruch 1, worin das Kalziumoxid anwesend ist in Form von Kalziumhydroxid.

**5.** Feuerfeste Zusammensetzung nach Anspruch 1, worin das Alkalimetallpolyphosphat Natriumhexametaphosphat ist.

**6.** Feuerfeste Zusammensetzung nach Anspruch 1, worin das Chromoxid in Form von pulverförmigem Chromerz vorliegt.

**7.** Feuerfeste Zusammensetzung nach Anspruch 1, worin der Ton luftflottierter Töpferton ist.

**8.** Feuerfeste Zusammensetzung nach Anspruch 1, worin der Kohlenstoff in Form von Gilsonit oder Ruß vorliegt.

**9.** Teilchenförmige, schnellbindende, feuerfeste, spritzfähige Zusammensetzung, umfassend ein basisches feuerfestes Aggregat, ein wasserlösliches glasartiges silikat, aktives Kalziumoxid und ein glasartiges Alkalimetallpolyphosphat für monolithische, feuerfeste Auskleidungen von metallurgischen Behältern, dadurch gekennzeichnet, daß das basische, feuerfeste Aggregat Magnesiumoxid ist und 83 Gew.-% der Gesamtzusammensetzung ausmacht, das glasartige Silikat Natriumsilikat ist, das ein molares Verhältnis von Natriumoxid zu Siliziumdioxid von 0,5 aufweist und 1 Gew.-% der Gesamtzusammensetzung ausmacht, das aktive Kalziumhydroxid 1,5 Gew.-% der Gesamtzusammensetzung ausmacht, das glasartige Alkalimetallpolyphosphat Natriumhexametaphosphat ist, das 3,5 Gew.-% der Gesamtzusammensetzung ausmacht, wobei die Zusammensetzung Chromoxid in Form von Chromerz, das 5 Gew.-% der Gesamtzusammensetzung ausmacht, enthält, Ton luftflottierter Töpferton ist, der 4 Gew.-% der Gesamtzusammensetzung ausmacht und Kohlenstoff in Form von Gilsonit und Ruß vorliegt, die jeweils 1 Gew.-% der Gesamtzusammensetzung ausmachen.

**10.** Verfahren zur Bildung einer monolithischen, feuerfesten Auskleidung an einem metallurgischen Behälter, das das Spritzen auf wenigstens einen Teil der Innenseite des Behälters einer wässrigen Mischung der feuerfesten Zusammensetzung nach Anspruch 1 umfaßt.